# EUROPEAN PATENT APPLICATION

(11) **EP 4 454 472 A1**
(43) Date of publication of application: **30.10.2024**
(21) Application number: 23214259.6
(22) Date of filing: 05.12.2023
(51) Int. Cl.: A23C 13/14, A23C 19/02, A23C 19/028, A23C 19/05, A23C 19/068

(54) **NATURAL CHEESE AND METHOD FOR MAKING NATURAL CHEESE WITH SPECIFIC TEXTURE ATTRIBUTES**

(30) Priority: 28.04.2023 US 202318141032
(71) Applicant: Sargento Cheese Inc., Plymouth, WI 53073 (US)
(72) Inventor: SAINANI, Mihir, Elkhart Lake, 53020 (US); SHAH, Kartik, Elkhart Lake, 53020 (US); DÜSTERHÖFT, Eva-Maria, 6718 ZB Ede (NL); ENGELS, Willem Johannes Marie, 6718 ZB Ede (NL); CLAYTON, Daniel Bradley, Sheboygan, 53083 (US)
(74) Representative: Forresters IP LLP

(57) **Abstract**

The invention provides a method for making natural cheese with specific texture attributes. The method uses five streams that are accumulated to make the natural cheese. The five streams include a stream of raw milk, a stream of concentrated acidified milk, a stream of cream, a stream of homogenized cream and a stream of water.

## Description

### CROSS-REFERENCE TO RELATED APPLICATIONS

The application claims the benefit of Provisional Application No. 63/056,821 filed 7/27/2020, which is hereby incorporated by reference, and claims the benefit of Application No. 17/385,107 filed on 7/26/2021, which is hereby incorporated by reference.

### FIELD OF THE INVENTION

The invention relates to the field of natural cheese and a method for making natural cheese with specific texture attributes.

### BACKGROUND OF THE INVENTION

Typical natural cheeses have well known texture attributes. Processed cheese, such as American cheese, is a food product made from natural cheese with the addition of other ingredients such as emulsifiers, sodium citrate, calcium phosphate, sorbic acid, enzymes, cheese culture, vitamin D3, milk fat, extra salt, saturated vegetable oils, whey and/or artificial food colorings. Processed cheese has several advantages over natural cheese including resistance to oiling offs when heated and a uniform look and physical behavior. Disadvantages include an elevated amount of sodium and artificial ingredients.

### SUMMARY OF THE INVENTION

The present invention includes a method for accumulating streams from which to make natural cheese including the steps of adding concentrated acidified milk, adding cream, adding homogenized cream, adding water and adding raw milk.

The present invention includes a method for producing natural cheese including the steps of creating a first stream of raw milk, creating a second stream of concentrated acidified milk, creating a third stream of cream, creating a fourth stream of homogenized cream, creating a fifth stream of water, combining the five streams and making natural cheese from the combined streams.

The present invention includes a method for producing natural cheese with specific texture and flavor attributes including the steps of creating a first stream of raw milk, creating a second stream of concentrated acidified milk by adding an acidulant to skim milk to reduce the pH to 5.5 - 6.5 and concentrating the acidified milk 3-4 fold, creating a third stream of cream having 35-45% milk fat, creating a fourth stream of homogenized cream having 20-25% milk fat, creating a fifth stream of water, combining the five streams and making natural cheese from the combined streams.

### BRIEF DESCRIPTION OF THE DRAWINGS

Preferred exemplary embodiments of the invention are illustrated in the accompanying drawings in which like reference numerals represent like parts throughout.
FIG. 1 is a flowchart relating to a cheese make process.
FIG. 2 is a flowchart relating to a second embodiment of a cheese make process.
FIG. 3 are photographs showing melting and oiling-off behaviors of cheeses.
FIG 4 is a graph of heating rheology data.
FIG. 5 is a graph of cooling rheology data.
FIG. 6 is a flowchart relating to a cheese make process.

Before any embodiments of the invention are explained in detail, it is to be understood that the invention is not limited in its application to the details of constructions and the arrangement of components set forth in the following description or illustrated in the drawings. The invention is capable of other embodiments and of being practiced or of being carried out in various ways.

### DETAILED DESCRIPTION

The invention relates to natural cheese and the production of natural cheese with specific texture attributes. The invention utilizes processes within the boundaries of conventional cheese make technology which allow for the tuning of natural cheese texture while maintaining an ingredient statement as that of a Standard of Identity cheese.

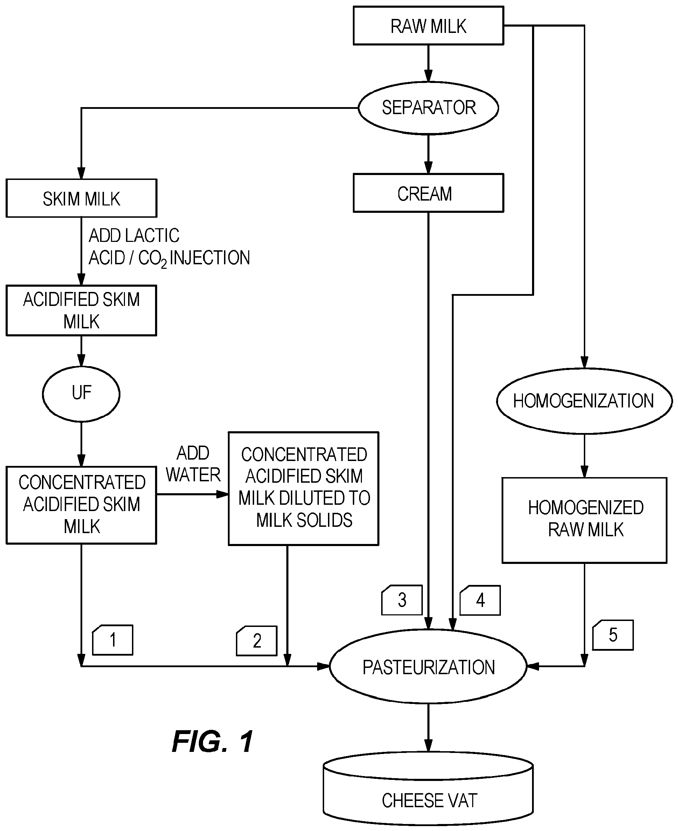

With reference to FIG. 1, an embodiment of one method for making natural cheese with specific texture attributes is shown. The method is divided into split streams relating to calcium reduction for melt behavior for example and relating to controlled homogenization for restricted oiling off for example. As shown in FIG. 1, for example, a total of five streams are produced and recombined, however, other numbers of streams can also be utilized.

In stream 1, raw milk is separated and an acidulant, such as lactic acid, is added to reduce the skim milk pH. Other acidulants, such as using a CO₂ injection, can also be utilized. The pH is reduced to between 5.5 and 6.5, more particularly reduced to between 5.7 to 5.9 and, more particularly reduced to 5.9. Following pH adjustment, the acidified skim milk is ultra-filtrated, as is known in the art, to concentrate the acidified skim milk to 3-5-fold, more particularly to 4-5 fold, and more particularly to 4.5.

In stream 2, a portion of the concentrated acidified milk is re-blended with water to produce a mineral reduced milk stream. The resultant stream will have reduced mineral contents such as calcium and phosphorus.

In stream 3, the raw milk is separated to produce cream with greater than 25% milk fat, more particularly in the range of 25-42%, and more particularly 35%.

Stream 4 includes raw milk.

In stream 5, raw milk is standardized to between with between 3-12% milk fat, more particularly to between 3-8% milk fat, and more particularly to 4% milk fat. After the desired milk fat is obtained, the stream is then homogenized, as is known in the art.

In FIG. 1, the streams can be combined in equal or differing percentages to form a unified stream that enters the pasteurization step as will be set forth in more detail below.

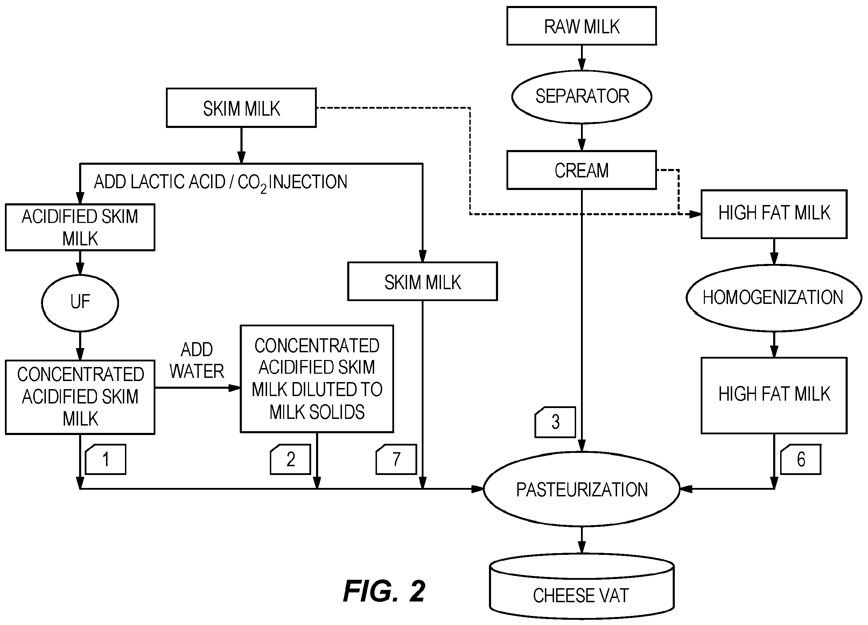

Turning now to FIG. 2, a second embodiment of a method for making natural cheese with specific texture attributes is shown.

Streams 1, 2 and 3 are the same as described above with respect to FIG. 1. Stream 7 is composed of skim milk. In stream 6, raw milk is standardized to between with between 12-18% milk fat, more particularly to between 13-16% milk fat, and more particularly to 15% milk fat. After the desired milk fat is obtained, the stream is then homogenized, as is known in the art.

The streams can be combined in the same or differing percentages to form a unified stream that enters a pasteurization step. Examples of various percentages for the seven streams described in FIGS. 1 and 2 is as follows:

**Table A. Cheese Milk Formulations (data given are parts per 100 m/m)**

| | CT5 | | | | CT7 | | | | CT4 | | | | CT3 | | | |
|---|---|---|---|---|---|---|---|---|---|---|---|---|---|---|---|---|
| | V1 | V2 | V3 | V4 | V1 | V2 | V3 | V4 | V1 | V2 | V3 | V4 | V1 | V2 | V3 | V4 |
| Stream 8 | | | | | 0.9 | 0.9 | 0.9 | 0.9 | | | | | | | | |
| Stream 7 | 47.2 | | | 47.2 | | | | | 46.8 | 46. 8 | 46. 8 | 46.8 | 51. 1 | 52. 6 | 48. 5 | 48. 4 |
| Stream 4 | | 19.7 5 | 19.7 5 | 0 | 19. 2 | 19. 2 | 19. 2 | 19. 2 | | | | | | | | |
| Stream 5 | | 39.7 | 39.7 | 0 | 40. 4 | 40. 3 | 40. 3 | 40. 3 | | | | | | | | |
| Stream 2 | 29.7 5 | 30.1 | 30.1 | 29.7 5 | 29. 8 | 29. 8 | 29. 8 | 29. 8 | 29.6 | 29. 6 | 29. 6 | 29.6 | 16. 7 | 17. 2 | 25. 8 | 25. 8 |
| Stream 1 | 5.3 | 5.2 | 5.2 | 5.3 | 4.9 | 4.9 | 4.9 | 4.9 | 6.00 | 6.0 0 | 6.0 0 | 6.00 | 10. 6 | 9.2 | 6.3 | 6.3 |
| Stream 3 | 7.05 | 5.25 | 5.25 | 7.05 | 4.8 | 4.9 | 4.9 | 4.9 | 7.00 | 7.0 0 | 7.0 0 | 7.00 | 9.7 | 9.4 5 | 8.6 | 8.6 |
| Stream 6 | 10.7 | 0 | 0 | 10.7 | | | | | 10.6 | 10. 6 | 10. 6 | 9.2 | 11. 8 | 11. 5 | 10. 8 | 10. 8 |
| Stream 10 | 0.76 | 0.76 | 0.76 | 0 | | | | | | | | | | | | |
| Stream 9 | | | | | | | | | | | | 1.4 | | | | |

The total amount demineralized protein prior to milk standardization is preferably in the range of 30-50%, and more particularly in the range of 45-47%, of total proteins in the vat. The total amount of homogenized fat is preferably in the range of 20-40%, and more particularly 35%, prior to milk standardization. The milk concentration factor is preferably approximately 1-1.5, and more particularly 1.15. The target protein: fat ratio in the final milk is preferably around 0.70-0.95, and more preferably 0.77-0.85. Preferably, these are the parameters that determine the ratios of each stream to the vat.

Unacidified skim milk concentrates can also be utilized to satisfy the standardization requirements such as amount of demineralized proteins, protein: fat ratio, and milk concentration factor as can be seen in example CT 7 (stream 8). Lactose powder (Stream 10) is added to compensate the lactose removal as a result of ultrafiltration as well to aid in acid development during the cheesemaking (CT5 V1 to V3). Portion of cream is added with lipolytic enzyme prior to homogenization to generate lipolytic flavor in the final cheese (Stream 9 in CT4 V4).

After pasteurization, the cheese make process proceeds as is known in the art. Additional lactic acid can be added after pasteurization to bring the pH of cheese milk down in the range of 6.1-6.5, and more specifically around 6.2-6.3.

The results of the method shown in FIGS. 1 and 2 include tailored texture attributes including controlled breakdown of the cheese structure and controlled melting and oiling off in particular. Further attributes include reduced stringiness, reduced oiling off, smooth melt, slightly adhesive, mild flavor, creamy, less acidic, and slightly lipolytic.

The natural cheese produced from the method disclosed herein preferably has the following compositional characteristics:

| | |
|---|---|
| Moisture | 42 - 47% |
| Fat | 24 - 35% |
| FDB | 41 - 61% |
| Salt | 1.5 - 2.7% |
| pH | 5.1-5.45 |
| Calcium | 350 to 550 mg/100 grams of cheese |
| Lactose | <0.02% |

The cheese made according to FIGS. 1 and 2 can also be tuned to add flavors. For example, a flavor can be added by blending a flavor ferment into the curd after salting and prior to pressing.

Examples CT1-CT5. An overview of five different example formulations for making a natural cheese is set forth in Table 1 and Table 2.

**Table 1. Cheese Make Parameters**

| **Cheese** | **% of fat horn,** | **% of fat lipase-treat** | **cf** | **[% of prot] demin.** | **Lactic acid bacteria (U/100 L)** | **Lactobacillus helveticus (U/100 L)** | **t/T (h/°C) milk ripening** | **CaCl₂ [g/100L]** | **Lactose [g/100L]** | **pH at salting** | **Ripening Temperature (°C)** | |
|---|---|---|---|---|---|---|---|---|---|---|---|---|
| **CT1** | | | | | | | | | | | | |
| *vat 1* | 0 | 0 | 1 | 0 | 10 | 0 | 1.5(32) | 23 | | 5.54 | 6 | |
| *vat 2* | 0 | 0 | 1 | 0 | 10 | 0 | 1.5(32) | 23 | | 5.65 | 6 | |
| *vat 3* | 0 | 0 | 1 | 25 | 10 | 0 | 1(32) | | | 5.62 | 6 | |
| *vat 4* | 20 | 0 | 1 | 25 | 10 | 0 | 1(32) | | | 5.64 | 6 | |

| **CT2** | | | | | | | | | | | | |
|---|---|---|---|---|---|---|---|---|---|---|---|---|
| *vat 1* | 0 | 0 | 1 | 35 | 10 | 0 | 0.5(32) | | | 5.5 | 6 | |
| *vat 2* | 0 | 0 | 1.25 | 43 | 10 | 0 | 0.5(32) | | | 5.5 | 6 | |
| *vat 3* | 35 | 0 | 1 | 35 | 10 | 0 | 0.5(32) | 11.5 | | 5.6 | 6 | |
| *vat 4* | 35 | 0 | 1.25 | 43 | 10 | 0 | 0.5(32) | | | 5.5 | 6 | |

| **CT3** | | | | | | | | | | | | |
|---|---|---|---|---|---|---|---|---|---|---|---|---|
| *vat 1* | 35 | 0 | 1.25 | 45 | 10 | 0 | 0.5(32) | | 480 | 5.55 | 6/10 | |
| *vat 2* | 35 | 0 | 1.25 | 45 | 10 | 2 | 0.5(32) | | 480 | | 6/10 | |
| *vat 3* | 35 | 0 | 1.15 | 45 | 10 | 0 | 0.5(32) | | 760 | 5.35 | 6 | |
| *vat 4* | 35 | 0 | 1.15 | 45 | 10 | 0 | 1.5(32) | | 760 | 5.3 | 6 | |

| **CT4** | | | | | | | | | | | | |
|---|---|---|---|---|---|---|---|---|---|---|---|---|
| *vat 1* | 35 | 0 | 1.15 | 47 | 25 | 2 | 1.0(32) | | 760 | 5.25 | 6 | |
| *vat 2* | 35 | 0 | 1.15 | 47 | 25 | 2 | 1.0(32) | | 760 | 5.3 | 6/10 | |
| *vat 2* | 35 | 0 | 1.15 | 47 | 25 | 2 | 1.0(32) | | 760 | 5.3 | 6/10 | |
| *vat 3* | 35 | 0 | 1.15 | 47 | 25 | 2 | 0.5(32) | | 760 | 5.45 | 6 | |
| *vat 4* | 35 | 4.6 | 1.15 | 47 | 25 | 2 | 0.5(32) | | 760 | 5.4 | 6 | |

| **CT 5** | | | | | | | | | | | | |
|---|---|---|---|---|---|---|---|---|---|---|---|---|
| *vat 1* | 35 | 0 | 1.15 | 47 | 25 | 2 | 1.0(32) | | 760 | 5.3 | 6 | |
| *vat 2* | 35 | 0 | 1.15 | 46 | 25 | 2 | 1.0(32) | | 760 | 5.24 | 6 | |
| *vat 3* | 35 | 0 | 1.15 | 46 | 25 | 2 | 1.0(32) | | 760 | 5.35 | 6 | |
| *vat 4* | 35 | 0 | 1.15 | 47 | 25 | 2 | 1.0(32) | | 0 | 5.37 | 6 | |

| | | | | | | | | | | | | |
|---|---|---|---|---|---|---|---|---|---|---|---|---|
| Abbreviations: hom. = homogenized, of = concentration factor, demin. = demineralized, t = time, T = temperature | | | | | | | | | | | | |

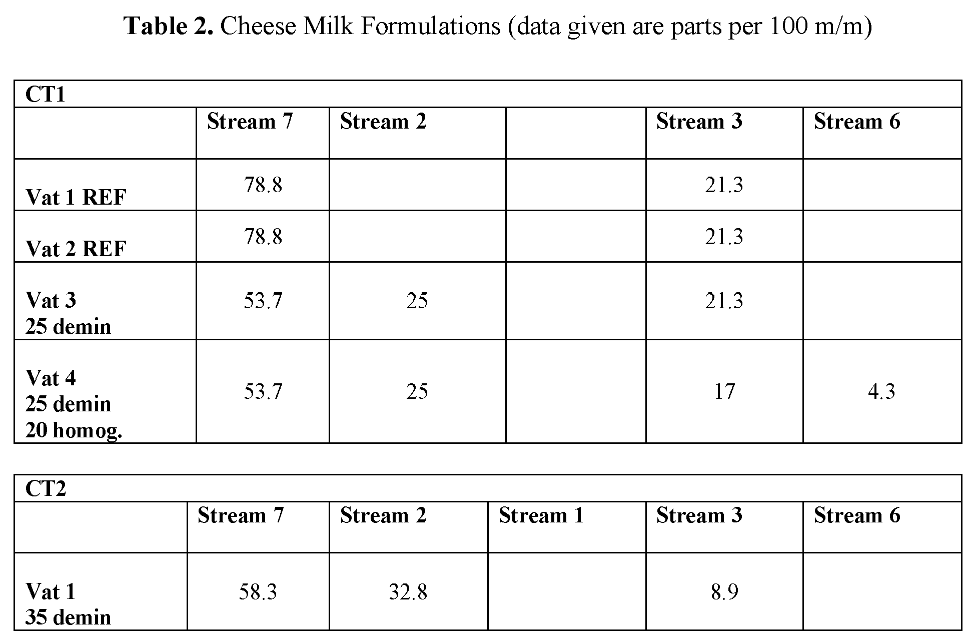

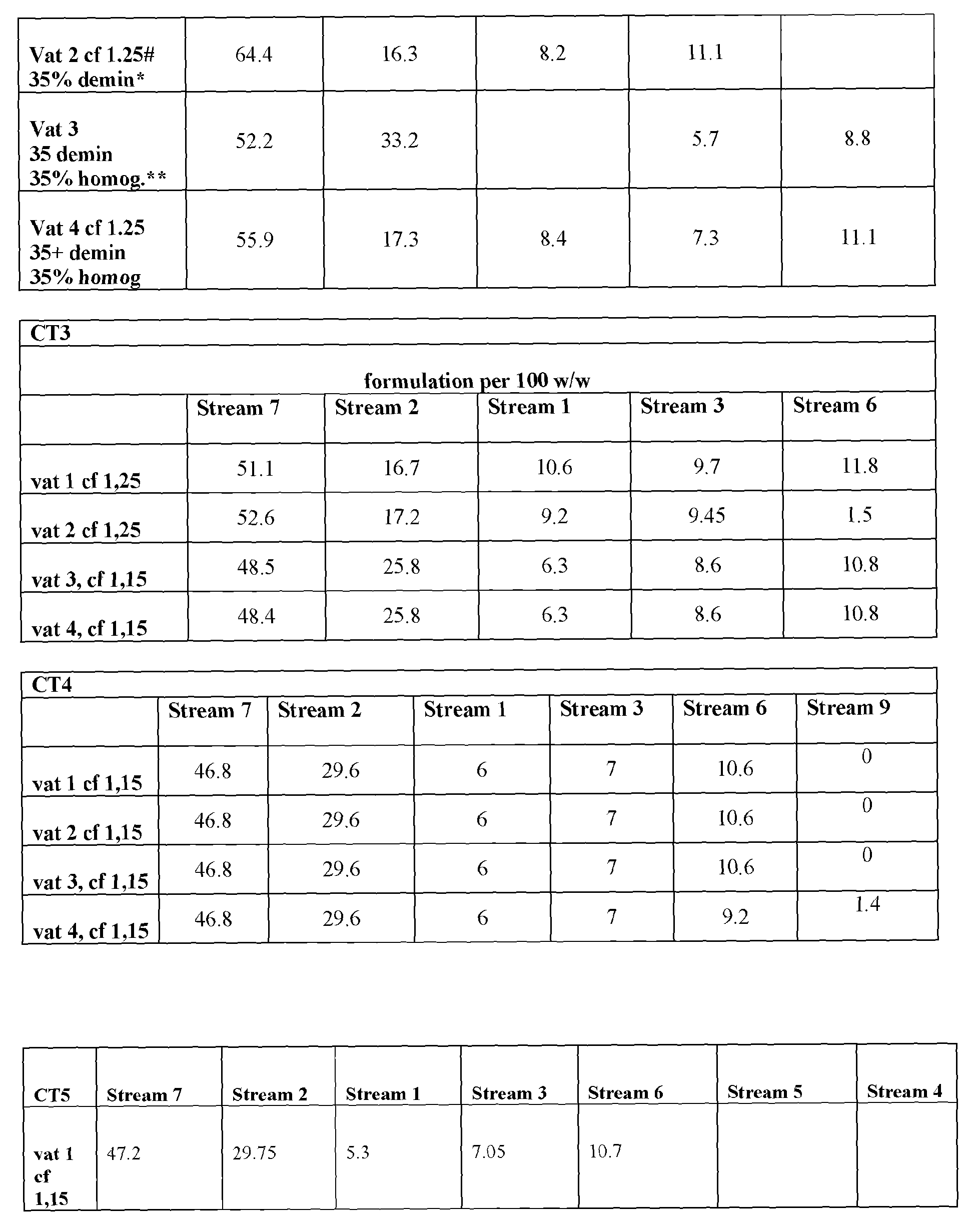

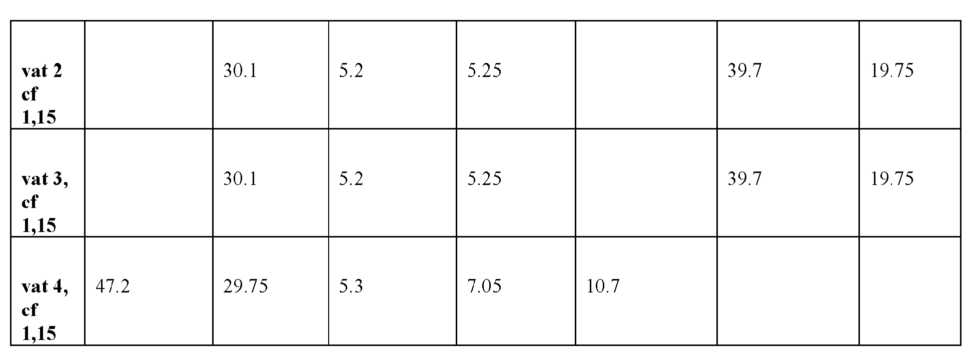

The mineral composition of Stream 2 in the examples is given in Table 3. The reduction of calcium and phosphorus achieved by ultrafiltration at pH 5.9 and dilution to starting volume with water is approximately 39% and 46% compared to the starting skim milk.

**Table 3. Total and serum Ca and P contents [mg/100g] in skim milk and demineralized split stream UFpH5.9dl in CT1-4. Serum Ca and P is defined as the fraction recovered in the permeate after ultracentrifugation (100,000 x g, lh/5°C). cf = concentration factor, dl = diluted**

| | **cf** | **Skim Ca** | **Skim P** | **Skim serum Ca** | **Skim serum P** | **UFpH5.9 dl Ca** | **UFpH5.9 dl P** | **UFpH5.9 dl serum Ca** | **UFpH5.9 serum P** |
|---|---|---|---|---|---|---|---|---|---|
| **CT1** | 3 | 134 | 103 | 47.7 | 49.5 | 102 | 71 | 35.4 | 27 |
| **CT2** | 4.2 | 141 | 107 | 40.3 | 41.9 | 91.3 | 61.8 | 28.8 | 20.7 |
| **CT3** | 4.4 | 128 | 97.9 | 45.2 | 44.9 | 77.7 | 53.4 | 28.9 | 20.5 |
| **CT4** | 4.4 | 125 | 98.4 | n. dt. | n. dt. | 74.9 | 52.1 | n. dt. | n. dt. |
| **CT5** | 4.4. | 126 | 102 | n. dt. | n. dt. | 77 | 53.5 | n. dt. | n. dt. |

| | | | | | | | | | |
|---|---|---|---|---|---|---|---|---|---|
| n.dt. = not determined | | | | | | | | | |

In Example CT1, the cheese make process was designed to achieve a composition and mimic processing for Monterey Jack type cheese as follows:
- pre-acidification of milk for 1.5 hours at 32°C using mesophilic/thermophilic starter
- adding rennet
- cutting, stirring (10 min, 10 min)
- heating to 39°C at a rate of approximately 0.3°C/min
- cooking (10 minutes at 39°C)
- draining
- dry stirring
- washing (sprinkling of cold water (15°C) on acidified curds for cooling, acidification and moisture control)
- dry salting at pH 5.6
- filling in molds
- pressing (0.5 hours at 3 bar, 1 hour at 4 bar)
- vacuum packing
- ripening at 6°C to 10°C

Processing times for Examples CT1-CT4 are set forth in Table 4.

**Table 4. Processing Times**

| | | **Pre-ripen time [min]** | **pH at rennet** | **Rennet time [min/sec]** | **Make time [h]*** | **pH at salt** |
|---|---|---|---|---|---|---|
| **CT1** | | | | | | |
| **REF vat 1** | | 90 | 6.61 | 31 | 3 | 5.54 |
| **REF vat 2** | | 90 | 6.6 | 30 | 3 | 5.65 |
| **vat 3** | | 60 | 6.52 | 23'30" | 2.75 | 5.54 |
| **vat 4** | | 60 | 6.59 | 21'50" | 2.75 | 5.64 |

| **CT2** | | | | | | |
|---|---|---|---|---|---|---|
| **vat 1** | | 30 | 6.45 | 40 | 3.8 | 5.5 |
| **vat 2** | | 30 | 6.41 | 31'20" | 3.8 | 5.5 |
| **vat 3** | | 30 | 6.41 | 25'15" | 3.6 | 5.63 |
| **vat 4** | | 30 | 6.43 | 29'50" | 3.9 | 5.5 |

| **CT3** | | | | | | |
|---|---|---|---|---|---|---|
| **vat 1** | | 30 | 6.4 | 31'55" | 4 | 5.55 |
| **vat 2** | | 30 | 6.28 | 19'25" | 4.5 | 5.38 |
| **vat 3** | | 30 | 6.26 | 20'25" | 4.25 | 5.35 |
| **vat 4** | | 90 | 6.25 | 22'10" | 4.4 | 5.3 |

| **CT4** | | | | | | |
|---|---|---|---|---|---|---|
| **vat 1** | | 60 | 6.22 | 19' | 2.8 | 5.22 |
| **vat 2** | | 65 | 6.2 | 19'15" | 2.9 | 5.3 |
| **vat 3** | | 35 | 6.25 | 17'45" | 2.8 | 5.4 |
| **vat 4** | | 30 | 6.24 | 20' | 3 | 5.4 |

| **CT5** | | | | | | |
|---|---|---|---|---|---|---|
| **vat 1** | | 60 | 6.20 | 19' 00" | 3 | 5.3 |
| **vat 2** | | 60 | 6.21 | 19' 00" | 2.8 | 5.24 |
| **vat 3** | | 60 | 6.22 | 24' 00" | 2.9 | 5.35 |
| **vat 4** | | 60 | 6.24 | 19' 00" | 2.7 | 5.37 |

| | | | | | | |
|---|---|---|---|---|---|---|
| * make time = time from rennet addition to start salting | | | | | | |

In the Examples, calcium and phosphorus reduction in cheese is obtained when using at total of 47% of demineralized split stream 1 and 2 to raise the concentration factor of the milk to 1.15, reducing milk pH prior to milk-ripening to pH 6.35 with lactic acid and at a starter dosage of 25U/100L. A pre-ripening time of 60 minutes and salting at pH of 5.22 contributed to the effective mineral reduction. In addition to the reduced mineral content in the split stream, the short make time and low pH in the final cheese contributed to additional calcium and phosphorus reduction. See Table 5.

**Table 5. Composition of Cheeses from CT1-4 Determined after 14 days from Production. Calcium and phosphorus contents are also expressed as Ca, P per 100g protein.**

| | [%] | [%] | [%] | mg/kg | mg/kg | [%] | [%] | | [%] | [%] |
|---|---|---|---|---|---|---|---|---|---|---|
| **CT1** | moist. | fat | Protein* | Ca | P | NaCl | lactose | pH (end) | Ca/prot | P/prot |
| vat 1 | 40.9 | 30.5 | 24.6 | 726 | 505 | 1.31 | n.d. | 5.28 | 2.96 | *2.06* |
| vat 2 | 41.2 | 30.5 | 24.0 | 727 | 508 | 1.47 | n.d. | 5.34 | *3.02* | 2.11 |
| vat 3 | 41 | 30.6 | 24.2 | 741 | 511 | 1.45 | n.d | 5.44 | 2.94 | *2.06* |
| vat 4 | 41 | 30.3 | 24.4 | 719 | 503 | 1.53 | n.d | 5.25 | 2.99 | *2.08* |

| **CT2** | | | | | | | | | | |
|---|---|---|---|---|---|---|---|---|---|---|
| vat 1 | 40.5 | 29 | 25.7 | 684 | 491 | 2.39 | n.d. | 5.50 | 2.66 | *1.91* |
| vat 2 | 39.3 | 31 | 25.1 | 660 | 476 | 2.12 | n.d. | 5.46 | *2.63* | *1.89* |
| vat 3 | 42.9 | 29.4 | 23.5 | 630 | 449 | 1.82 | n.d | 5.45 | *2.86* | *1.91* |
| vat 4 | 41.3 | 30.5 | 23.9 | 620 | 446 | 1.78 | n.d | 5.36 | 2.59 | *1.87* |

| **CT3** | | | | | | | | | | |
|---|---|---|---|---|---|---|---|---|---|---|
| vat 1 | 39.6 | 30.7 | 25.4 | 624 | 454 | 1.76 | n.d. | 5.34 | 2.45 | *1.78* |
| vat 2 | 38.3 | 32.1 | 25.4 | 583 | 442 | 1.9 | n.d. | 5.34 | *2.30* | *1.74* |
| vat 3 | 38.3 | 31.5 | 25.9 | 581 | 447 | 2.1 | n.d | 5.40 | 2.24 | *1.73* |
| vat 4 | 39.7 | 31.7 | 24.5 | 537 | 426 | 1.85 | n.d | 5.25 | 2.19 | *1.74* |

| **CT4** | | | | | | | | | | |
|---|---|---|---|---|---|---|---|---|---|---|
| vat 1 | 42.8 | 29.5 | 22.9 | 433 | 319 | 2.1 | | 5.15 | *1.89* | *1.39* |
| vat 2 SC | 43.7 | 29.6 | 22.4 | | | 1.77 | | 5.15 | | |
| vat 2 SC | 44.3 | 29.1 | 22.3 | | | 1.87 | | 5.14 | | |
| vat 3 | 42.2 | 30.3 | 22.9 | 490 | 352 | 2 | | 5.26 | 2.14 | *1.54* |
| vat 4 | 40.8 | 31.1 | 23.8 | 515 | 369 | 1.95 | | 5.32 | 2.16 | *1.55* |

| **CT5** | | | | | | | | | | |
|---|---|---|---|---|---|---|---|---|---|---|
| vat 1 | 40.7 | 30.8 | 23.7 | 500 | 394 | 2.21 | 0.19 | 5.28 | 2.11 | *1.66* |
| vat 2 | 46.6 | 27.3 | 21.4 | 444 | 349 | 2.12 | n.d | 5.16 | *2.08* | *1.63* |
| vat 3 | 43.6 | 29.1 | 22.6 | 483 | 374 | 2.15 | n.d | 5.29 | 2.14 | *1.66* |
| vat 4 | 42 | 29.8 | 23.1 | 393 | 511 | 2.09 | n.d | 5.30 | *1.70* | 2.21 |

| | | | | | | | | | | |
|---|---|---|---|---|---|---|---|---|---|---|
| * in *italics* approximate protein content calculated according to: protein [%] = dry matter [%] - (fat [%] + ash [%] + lactate [%]; n.d. = not detected | | | | | | | | | | |

Cheese firmness is measured instrumentally under cold conditions (refrigerator, shredding/slicing temperature) and melting properties were measured by two empirical tests, modified Schreiber test for melt area and the extent of oiling-off The data is summarized in Table 6.

**Table 6. Hot Functionality (oiling-off, melt area), as Measured by Modified Schreiber Test, and Texture (cold) as Measured by Uniaxial Compression (Texture Analyzer) of Cheeses from CT1-4 after 8-10 Weeks Ripening. Unless otherwise indicated (*), the cheeses were ripened at 6°C.**

| | Thickness oil layer [%] | | [% of initial diameter] | | [kPa] | | [-/-] | |
|---|---|---|---|---|---|---|---|---|
| | **oiling off** | oil- off stdev | **Melt area** | stdev | **fracture stress** | stdev | **frac strain** | stdev |
| CT1 | | | | | | | | |
| **vat 1(REF)** | 10.8 | 2.3 | 201.0 | 1.1 | 57.2 | 9.9 | 0.94 | 0.04 |
| **vat 2(REF)** | 12.8 | 1.6 | 196.2 | 1.8 | 52.7 | 7.6 | 1.04 | 0.06 |
| **vat 3** | 12.3 | 2.1 | 177.7 | 2.3 | 70.6 | 12.1 | 1.14 | 0.05 |
| **vat 4** | 9.3 | 1.6 | 173.7 | 4.5 | 70.4 | 10.8 | 1.23 | 0.05 |

| **CT2** | | | | | | | | |
|---|---|---|---|---|---|---|---|---|
| **vat 1** | 18.3 | 1.6 | 186.0 | 2.6 | 103.7 | 10.1 | 0.83 | 0.07 |
| **vat 2** | 15.2 | 0.4 | 186.9 | 5.7 | 111.8 | 11.5 | 0.89 | 0.04 |
| **vat 3** | 4.2 | 1.1 | 180.4 | 3.8 | 59.3 | 7.4 | 1.17 | 0.07 |
| **vat 4** | 7.4 | 1.4 | 178.1 | 2.5 | 64.5 | 9.2 | 1.06 | 0.09 |

| **CT3** | | | | | | | | |
|---|---|---|---|---|---|---|---|---|
| **vat 1** | 9 | 2 | 155.6 | 3.0 | 110.8 | 5.5 | 0.98 | 0.04 |
| **vat 2** | 11 | 1 | 169.7 | 3.0 | 130.1 | 13.8 | 1.03 | 0.06 |
| **vat 3** | 11 | 2 | 147.0 | 7.5 | 138.6 | 9.0 | 0.90 | 0.07 |
| **vat 4** | 10 | 1 | 168.8 | 3.5 | 77.6 | 3.1 | 0.99 | 0.06 |
| **vat 1/10*** | 10 | 2 | 173.1 | 3.3 | 76.4 | 8.9 | 0.82 | 0.08 |
| **vat 2/10*** | 11 | 2 | 169.2 | 2.5 | 100.3 | 9.7 | 0.86 | 0.1 |

| **CT4** | | | | | | | | |
|---|---|---|---|---|---|---|---|---|
| **vat 1** | 9 | 1 | 178.8 | 6.9 | 41.8 | 10.1 | 0.7 | 0.07 |
| **vat 3** | 7 | 2 | 173.9 | 2.3 | 50.4 | 6.9 | 0.84 | 0.07 |
| **vat 4** | 14 | 3 | 164.8 | 2.1 | 68.6 | 3.3 | 0.97 | 0.06 |

| **CT5** | | | | | | | | |
|---|---|---|---|---|---|---|---|---|
| **V1** | 10.1 | 1.3 | 175 | n.d | n.d | n.d | n.d | n.d |
| **V2** | 0.5 | 0.2 | 158 | n.d | n.d | n.d | n.d | n.d |
| **V3** | 1.2 | 0.5 | 152 | n.d | n.d | n.d | n.d | n.d |
| **V4** | 6.7 | 0.8 | 182 | | | | | |

| | | | | | | | | |
|---|---|---|---|---|---|---|---|---|
| * Vat 1 and 2, ripened at 10°C | | | | | | | | |

The calcium content of the in the final cheese influences the hot functionality of the cheese such as melt behavior. Despite higher extent of demineralization, cheeses spread less upon melting than the reference cheeses with normal calcium and phosphate content at near identical moisture content.

Partial homogenization is effective to reduce the extent of oiling-off, compared to the reference cheese and to other variants without homogenized cream. See for example the following:

### Relative Thickness of Oil and Oiling Off Results of CT2 Vatl-4

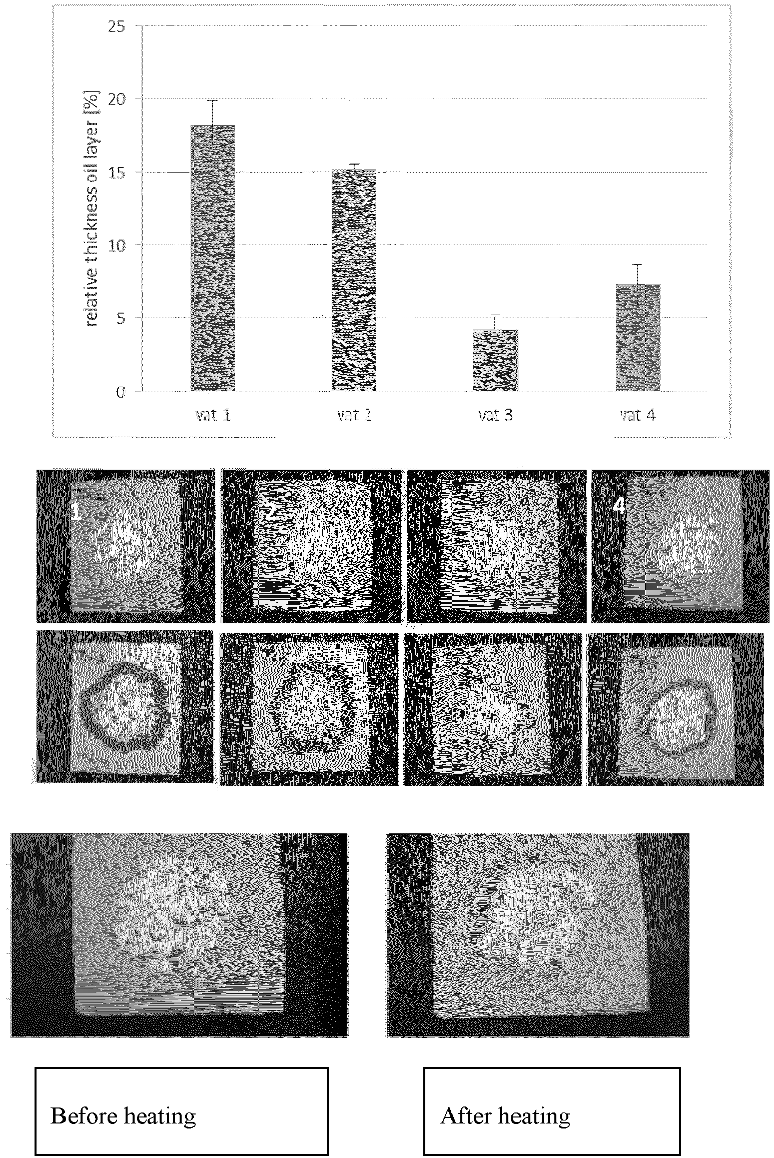

Oiling-off of cheeses from CT2. Vat 3 and vat 4 had 35% of fat homogenized, vat 1 and vat 2 non-homogenized. The upper picture shows shreds before heating, the lower pictures after heating. Oil exudation can be observed as dark zone around the melted cheese.

To assess cold functionality, the firmness (stress at fracture) and shortness (strain at fracture) is measured by uniaxial compression test. Data are given in Table 6. Fracture stress is translated to firmness and fracture strain to shortness. The firmness of the cheeses differed from around 50 kPa to 130 kPa and it appeared to be most strongly correlated with moisture contents. The level of calcium in cheese was not found to be related to firmness. Fracture strain, shortness (= opposite to long/elastic) appeared to be correlated with calcium content of the cheese while pH appeared not to influence the fracture strain.

With respect to cold functionality, the results of the instrumental compression-fracture measurement are in line with sensory perceived firmness of the cheeses.

With respect to hot functionality, with regard to melt area (modified Schreiber test), the amount of spread is comparable with that the targeted processed cheese counterparts.

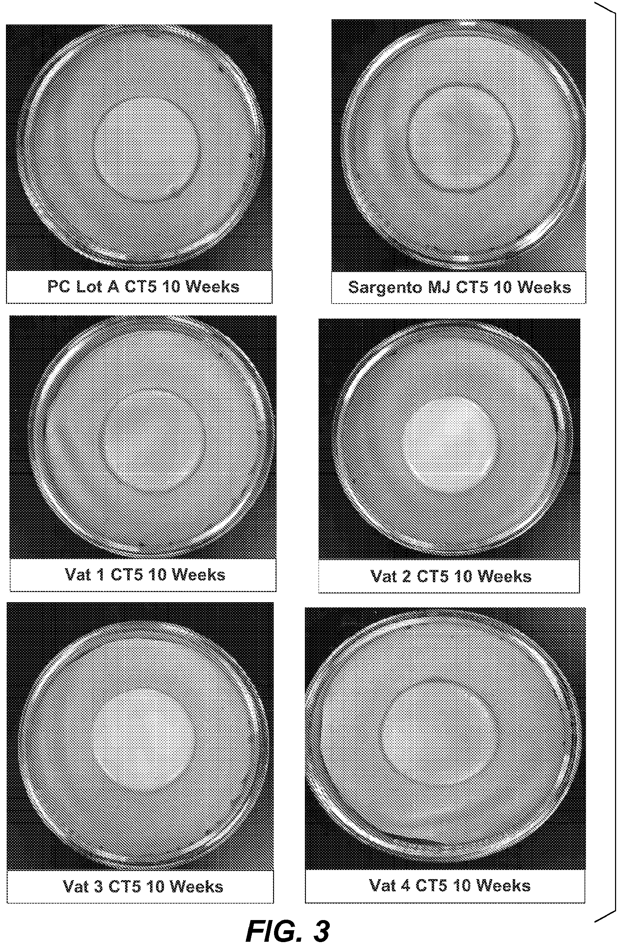

With respect to oiling-off, the effect of emulsion properties is pronounced in the oiling-off behavior as shown in Fig. 3.

In one example, the cheese milk standardized with the various streams according to the one process has the following characteristics: Protein:fat = 0.88, protein content = 4.16 % (i.e., concentration factor 1.15 compared to normal milk with 3.6 % protein), lactose content = 3.2% (CT5/vat 4), i.e., a dilution by 29 % compared to starting milk (4.5 % lactose), proportion of demineralized protein (retentate + diluted retentate) is 47% of total protein in the standardized cheese milk, and the proportion of homogenized fat is 35% of total fat in the standardized cheese milk.

The natural cheeses produced had the following approximate composition: moisture content 41 - 42%, NaCl content 1.8 %, fat content 30% and pH - 5.30. The calcium and phosphorus content of these cheeses is reduced by approximately 30% and 40% respectively, compared to a reference cheese.

To evaluate the cheese melting properties analytically, temperature sweeps by oscillating small strain rheology were conducted. This methodology relates to the dynamic changes in the ratio between a system's elastic/solid and viscous/liquid behavior (tan δ = G"/G'), as function of temperature. For comparison purpose, a commercially procured sample of Monterey Jack was also evaluated against the cheeses. Parameters used for the evaluations are described in Table 7.

**Table 7. Parameters to conduct oscillating small strain rheology**

| | |
|---|---|
| **Manufacturer/Model** | Anton Parr |
| **Temperature Ramp** | **5°C** - **80°C** - **40°C** |
| **Temperature Ramp Speed** | 2°C/min |
| **Frequency** | 1 Hz |
| **Strain** | 0.1% strain |
| **Sample Diameter** | 25 mm |
| **Sample thickness** | approx. 2 mm |

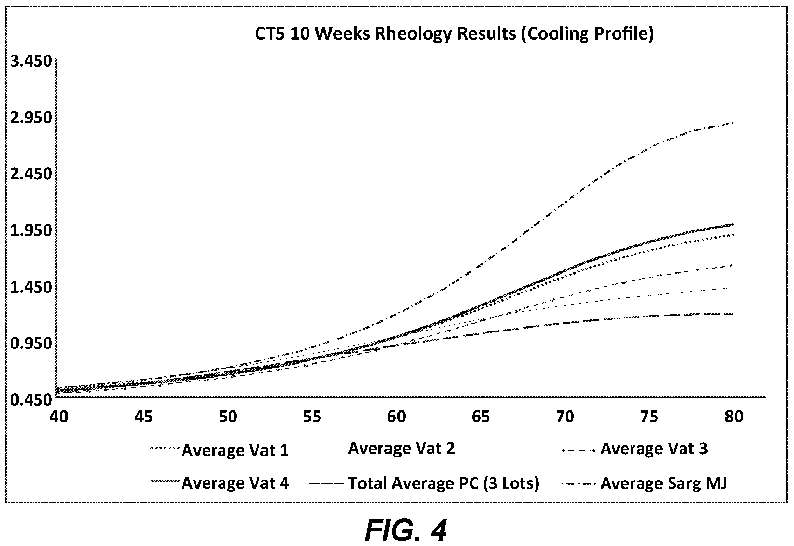

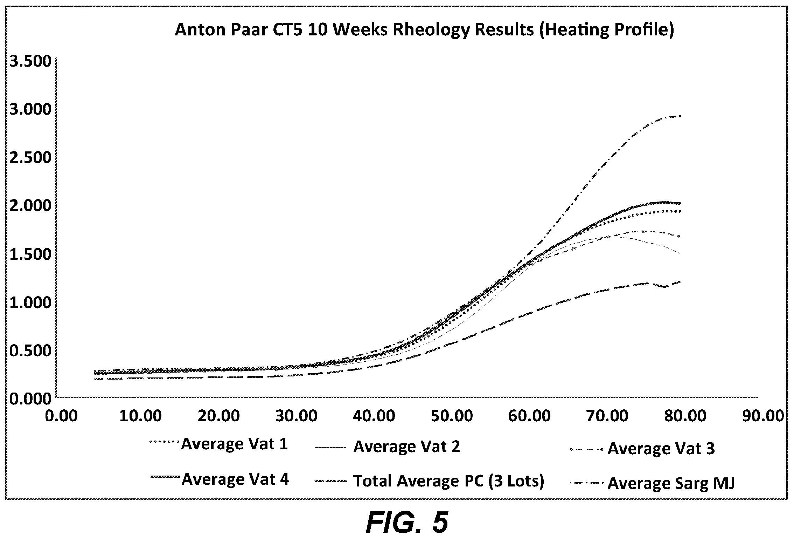

The visco-elastic behavior upon heating to 80°C and cooling was markedly different from a standard natural cheese (Monterey Jack), and approached that of processed cheese. As can be seen in Table 8, the Tan δₘₐₓ (heat) was highest in the natural cheese sample whereas, the Tan δₘₐₓ (heat) was comparatively low for the processed cheese sample. The Tan δₘₐₓ (heat) for all the test cheeses ranged from 1.65 to 2.01. CT5 cheeses are less fluid-like and assumingly more cohesive than the natural cheese. The cross-over temperature was found to be typically higher for processed cheeses. The processed cheeses achieved liquid-like properties only at comparatively higher temperature, compared to the natural cheeses. See Figs. 4 and 5. Cheeses CT5 are closest to the behavior of the processed cheese, notably in the cooling trajectory between 70 and 50°C.

**Table 8: Parameters deduced from heating-cooling curves**

| | **T (Crossover) (°C) Tan δ=1 (Heat)** | **Tan δmax (Heat)** | **T (Crossover) (°C) Tan δ=1 (Cool)** | **Tan δmax (Cool)** |
|---|---|---|---|---|
| **CT5 Vat 1** | 53.8 | 1.92 | 60.81 | 1.89 |
| **CT5 Vat 2** | 55.88 | 1.65 | 60.81 | 1.42 |
| **CT5 Vat 3** | 53.85 | 1.71 | 62.91 | 1.62 |
| **CT5 Vat 4** | 53.85 | 2.01 | 60.81 | 1.98 |
| **Monterey Jack** | 53.85 | 2.90 | 58.70 | 2.88 |
| **Total Average PC** | 66.00 | 1.19 | 65.01 | 1.19 |

With respect to Fig. 4, temperature sweep experiment (from 5-80°C: Heating) of cheeses CT5 @10 weeks, processed cheese (3 different lots) and Monterey Jack (MJ) @ 10 weeks by small strain oscillating rheology. Tan δ (G"/G') is given as function of temperature (avg of n=3 for CT5 samples, average of 3 lots n=9 for processed cheese, average of n=3 for Monterey Jack.

With respect to Fig. 5, temperature sweep experiment (from 80-40°C: Cooling) of cheeses CT5 @10 weeks, processed cheese (3 different lots) and Monterey Jack (MJ) @ 10 weeks by small strain oscillating rheology. Tan δ (G"/G') is given as function of temperature (avg of n=3 for CT5 samples, average of 3 lots n=9 for processed cheese, average of n=3 for Monterey Jack). The box indicates the temperature range during cooling which is relevant from consumption point of view.

The rheological analysis indicates differences in molecular assembly of the fat-filled protein matrix of the processed cheese and that of the texture-tuned cheeses of CT6. The processed cheese attains fluid-like character at higher temperatures (T crossover heating 12°C higher) and maximum Tan δ remains approx. 35% lower (indicating a higher cohesivity).

The cheeses produced meets the desired chemical composition. Firmness and specific melting properties (e.g., oiling-off, spread, low/no stringiness, homogeneous melt) resembles those of the processed cheese benchmarks.

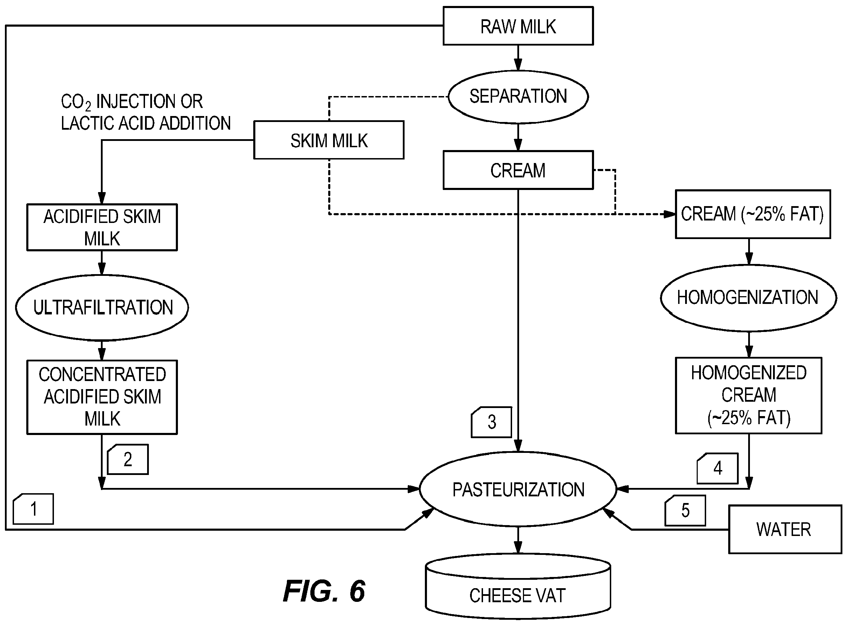

Turning now to FIG. 6, there is shown a method for making natural cheese with specific texture and flavor attributes. The method uses five streams that are combined, however, other numbers of streams can also be utilized.

Stream 1 is raw milk as is known in the art.

Stream 2 is milk, such as skim milk, that has been separated from the raw milk, acidified, ultrafiltered and concentrated. More specifically, an acidulant, such as lactic acid, is added to reduce the pH. Other acidulants, such as a CO₂ injection, can also be utilized. The pH is reduced to between 5.5 and 6.5, and more particularly reduced to between 5.7 to 6.0. Following pH adjustment, the acidified skim milk is ultra-filtrated, as is known in the art, to concentrate the acidified skim milk to 3-5-fold, more particularly to 3-4 fold, and more particularly to 3 fold.

Stream 3 is cream that has been separated from the raw milk. The fat content of the cream can be greater than 25%, however, other ranges can be utilized such as 20 - 50%, 35 - 45% and more particularly 40 - 45%.

Stream 4 is a homogenized cream stream. The fat content ranges that can be utilized include 15 - 30%, 20 - 25% and more particularly approximately 25%.

Stream 5 is water such as standard culinary type water.

The five streams can be combined in equal or differing percentages by weight or by volume to form a unified stream for pasteurization. For example, the following percentages by volume can be used:

**Table 9: Stream Combination Percentages**

| STREAM | PERCENTAGE BY VOLUME |
|---|---|
| 1 | 20-30% |
| 2 | 20-30% |
| 3 | 3-10% |
| 4 | 4 - 15% |
| 5 | 20 - 40% |

In one example combination, the approximate percentages by volume are Stream 1 are 24-28%, Stream 2 are 27-28%, Stream 3 are 5 - 6%, Stream 4 are 7 - 9% and Stream 5 are 31-35%.

In another example combination, the percentages by volume are approximately Stream 1 25%, Stream 2 25%, Stream 3 5%, Stream 4 10% and Stream 5 35%.

After the accumulation and combination of the streams and pasteurization, the cheese make process proceeds as is known in the art. Additional lactic acid or CO2 can be added after pasteurization to bring the pH of cheese milk in the range of 5.8 - 6.35, and more specifically in the range of 5.95 - 6.10.

The results of the method shown in FIG. 6 include tailored texture attributes such as increased plasticity, minimal free oil and more flowable body upon heating, and improved melt profile, and unique flavors such as savory, umami, and fresh dairy. The natural cheese produced from the method in FIG. 6 preferably has the following compositional characteristics:

**Table 10: Compositional Characteristics**

| | |
|---|---|
| Moisture | 47-53% |
| Fat | 20 - 30% |
| FDB | 38 - 62% |
| Salt | 1.3 - 2.7% |
| pH | 5.0 - 5.5 |
| Calcium | 350 to 550 mg/100 grams of cheese |
| Lactose | 0.01 - 0.10% |

The present invention is now described with reference to the following clauses:
1. A method for accumulating streams from which to make natural cheese, said method including the steps:
   adding concentrated acidified milk;
   adding cream;
   adding homogenized cream;
   adding water; and
   adding raw milk.
2. The method of clause 1 wherein the acidified milk has a pH in the range of 5.5-6.5.
3. The method of clause 1 or clause 2 wherein the acidified milk is concentrated 3-5 fold.
4. The method of any of clauses 1 to 3 wherein the acidified milk is skim milk.
5. The method of any of clause 1 to 4 wherein the cream has a range of 20-50% milk fat.
6. The method of any of clauses 1 to 5 wherein the homogenized cream has a range of 15 - 30% milk fat.
7. The method of any of clause 1 to 6 wherein the concentrated acidified milk is 20-30% by volume of the accumulated streams, the raw milk is 20-30% by volume of the accumulated streams, the cream is 3-10% by volume of the accumulated streams, the homogenized cream is 4-15% by volume of the accumulated streams, and the water is 20-40% by volume of the accumulated streams.
8. A method for producing natural cheese, said method including the steps:
   creating a first stream of raw milk;
   creating a second stream of concentrated acidified milk;
   creating a third stream of cream;
   creating a fourth stream of homogenized cream;
   creating a fifth stream of water;
   combining the five streams; and
   making natural cheese from the combined streams.
9. The method of clause 8 wherein the acidified milk has a pH in the range of 5.5-6.5.
10. The method of clause 8 or clause 9 wherein the acidified milk is concentrated 3-5 fold.
11. The method of any of clauses 8 to 10 wherein the acidified milk is skim milk.
12. The method of any of clauses 8 to 11 wherein the cream has a range of 20-50% milk fat.
13. The method of any of clauses 8 to 12 wherein the homogenized cream has a range of 15 - 30% milk fat.
14. A method for producing natural cheese with specific texture and flavor attributes, said method including the steps:
   creating a first stream of raw milk;
   creating a second stream of concentrated acidified milk by adding an acidulant to skim milk to reduce the pH to 5.5 - 6.5 and concentrating the acidified milk 3-4 fold;
   creating a third stream of cream having 35-45% milk fat;
   creating a fourth stream of homogenized cream having 20-25% milk fat;
   creating a fifth stream of water;
   combining the five streams; and
   making natural cheese from the combined streams.
15. The method of clause 14 wherein the first stream is 20-30% by volume of the combined streams, the second stream is 20-30% by volume of the combined streams, the third stream is 3-10% by volume of the combined streams, the fourth stream 4-15% by volume of the combined streams and the fifth stream is 20-40 by volume of the combined streams.
16. The method of clause 14 or clause 15 wherein the first stream is 24-28% by volume of the combined streams, the second stream is 27-28% by volume of the combined streams, the third stream is 5-6% by volume of the combined streams, the fourth stream 7-9% by volume of the combined streams and the fifth stream is 31-35% by volume of the combined streams.
17. The method of any of clauses 14 to 16 wherein the acidified milk is concentrated 3 fold.
18. The method of any of clauses 14 to 17 wherein the natural cheese has a fat content of 20 - 30% by weight.
19. The method of any of clauses 14 to 18 wherein the natural cheese has a moisture content of between 47-53% by weight.

Various features and advantages of the invention are set forth in the following claims.

## Claims

1. A method for accumulating streams from which to make natural cheese, said method including the steps:
adding concentrated acidified milk;
adding cream;
adding homogenized cream;
adding water; and
adding raw milk.

2. The method of claim 1 wherein the acidified milk has a pH in the range of 5.5-6.5.

3. The method of claim 1 or claim 2 wherein the acidified milk is concentrated 3-5 fold.

4. The method of any of claims 1 to 3 wherein the acidified milk is skim milk.

5. The method of any of claims 1 to 4 wherein the cream has a range of 20-50% milk fat.

6. The method of any of claims 1 to 5 wherein the homogenized cream has a range of 15 - 30% milk fat.

7. The method of any of claims 1 to 6 wherein the concentrated acidified milk is 20-30% by volume of the accumulated streams, the raw milk is 20-30% by volume of the accumulated streams, the cream is 3-10% by volume of the accumulated streams, the homogenized cream is 4-15% by volume of the accumulated streams, and the water is 20-40% by volume of the accumulated streams.

8. A method for producing natural cheese, said method including the steps:
creating a first stream of raw milk;
creating a second stream of concentrated acidified milk;
creating a third stream of cream;
creating a fourth stream of homogenized cream;
creating a fifth stream of water;
combining the five streams; and
making natural cheese from the combined streams.

9. The method of claim 8 wherein the acidified milk has a pH in the range of 5.5-6.5.

10. The method of claim 8 or claim 9 wherein the acidified milk is concentrated 3-5 fold; and/or,
wherein the acidified milk is skim milk.

11. The method of any of claims 8 to 11 wherein the cream has a range of 20-50% milk fat; and/or
wherein the homogenized cream has a range of 15 - 30% milk fat.

12. A method for producing natural cheese with specific texture and flavor attributes, said method including the steps:
creating a first stream of raw milk;
creating a second stream of concentrated acidified milk by adding an acidulant to skim milk to reduce the pH to 5.5 - 6.5 and concentrating the acidified milk 3-4 fold;
creating a third stream of cream having 35-45% milk fat;
creating a fourth stream of homogenized cream having 20-25% milk fat;
creating a fifth stream of water;
combining the five streams; and
making natural cheese from the combined streams.

13. The method of claim 12 wherein the first stream is 20-30% by volume of the combined streams, the second stream is 20-30% by volume of the combined streams, the third stream is 3-10% by volume of the combined streams, the fourth stream 4-15% by volume of the combined streams and the fifth stream is 20-40 by volume of the combined streams.

14. The method of claim 12 or claim 13 wherein the first stream is 24-28% by volume of the combined streams, the second stream is 27-28% by volume of the combined streams, the third stream is 5-6% by volume of the combined streams, the fourth stream 7-9% by volume of the combined streams and the fifth stream is 31-35% by volume of the combined streams; and/or,
wherein the acidified milk is concentrated 3 fold.

15. The method of any of claims 12 to 14 wherein the natural cheese has a fat content of 20 - 30% by weight; and/or,
wherein the natural cheese has a moisture content of between 47-53% by weight.
